# EUROPÄISCHE PATENTSCHRIFT

(11) **EP 3 999 207 B1**
(45) Veröffentlichungstag und Bekanntmachung des Hinweises auf die Patenterteilung: **21.02.2024**
(21) Anmeldenummer: 20739981.7
(22) Anmeldetag: 13.07.2020
(51) Int. Cl.: B01D 29/96, B01D 35/30, B01D 46/00, B01D 46/24

(54) **FLUIDFILTER FÜR EINEN KRAFTWAGEN UND FILTERKARTUSCHE FÜR EINEN FLUIDFILTER**
FLUID FILTER FOR A MOTOR VEHICLE AND FILTER CARTRIDGE FOR A FLUID FILTER
FILTRE POUR FLUIDES POUR UN VÉHICULE À MOTEUR ET CARTOUCHE FILTRANTE POUR UN FILTRE POUR FLUIDES

(30) Priorität: 15.07.2019 DE 102019004927
(43) Veröffentlichungstag der Anmeldung: 25.05.2022
(73) Patentinhaber: Daimler Truck AG, 70771 Leinfelden-Echterdingen (DE)
(72) Erfinder: SCHUMACHER, Eric, 70565 Stuttgart (DE)
(86) Internationale Anmeldenummer: PCT/EP2020/069701
(87) Internationale Veröffentlichungsnummer: WO 2021/009094

(56) Entgegenhaltungen:
- EP-A1- 1 938 882
- WO-A1-2008/030707
- WO-A1-2014/029828
- WO-A1-2015/173624
- WO-A1-2018/067437
- IT-A1-201600 097 797
- US-A- 5 683 478

## Beschreibung

Die Erfindung betrifft einen Fluidfilter für einen Kraftwagen, mit einer Filterkartusche, welche in einem Filtergehäuse des Fluidfilters angeordnet ist. Das Filtergehäuse umfasst einen Gehäusetopf und ein Deckelelement. Die Filterkartusche weist ein Filtermaterial auf. Durch Drehen um eine Längsachse der Filterkartusche ist die Filterkartusche mit dem Gehäusetopf des Filtergehäuses verbunden. Des Weiteren betrifft die Erfindung eine Filterkartusche für einen solchen Fluidfilter.

Aus dem Kraftwagenbau sind Fluidfilter wie beispielsweise Ölfilter bekannt, welche in einem Filtergehäuse angeordnet sind, welches einen Gehäusetopf und einen Gehäusedeckel umfasst. Nach dem Abschrauben des Gehäusedeckels von dem Gehäusetopf kann der Filter in das Filtergehäuse eingebaut werden. Für die Befestigung des Gehäusedeckels an dem Gehäusetopf gibt es unterschiedliche Anbindungslösungen.

Die EP 1 938 882 A1 beschreibt ein Filterelement mit einem Trägerteil, welches einen zylindrischen Hauptkörper umfasst. Ein jeweiliges Ende von zwei Federteilen ist mit dem Hauptkörper verbunden, wobei ein Kontaktteil einstückig mit einem anderen Ende des jeweiligen Federteils ausgebildet ist.

Die WO 2008/030707 A1 beschreibt ein Filterelement mit einer Endplatte, welche einen zylindrischen Verbindungsabschnitt aufweist. An dem Verbindungsabschnitt sind bogenförmige Klemmbügel angeordnet, welche einen solchen Radius aufweisen, dass die Klemmbügel parallel zu dem Verbindungsabschnitt verlaufen.

Die DE 696 29 208 T2 offenbart eine Kraftstofffilteranordnung mit einer Stützplatte im unteren Abschnitt des zugehörigen Filtergehäuses auf der ein Ringfilterelement aufliegt. Unter der Stützplatte ist ein Schmutzstoffbehälter angebracht. Die Stützplatte weist eine horizontale und flache spiralförmige Flüssigkeitspassage auf, durch die das Filtergehäuse mit dem Schmutzstoffbehälter verbunden ist. An seinem oberen Ende wird das in den Kraftstofffilter eingesetzte Ringfilterelement durch eine an der Deckplatte des Filtergehäuses mittige rohrförmige Verbindung, die mit einer Dichtung ummantelt ist, zentriert und gehalten.

Die DE 10 2016 212 591 A1 beschreibt eine Flüssigkeitsfiltereinrichtung, bei der ein im Filtergehäuse angeordnetes Ringfilterelement eine Rein- von einer Rohseite trennt. An einer unteren Endscheibe des Ringfilterelements ist ein Bypassventil vorgesehen. Zur Strömungsumlenkung der Flüssigkeit sind bspw. auf der Endscheibe spiralsegmentförmige Strömungsleitelemente angebracht. Auch bei dieser Konstruktion wird das in das Filtergehäuse eingesetzte Ringfilterelement durch ein zentrales Abflussrohr im Gehäusedeckel zentriert gehalten.

Die US 3 272 336 zeigt eine Ölfiltereinrichtung, deren Ringfiltereinsatz an seiner oberen Endscheibe spiralsegmentförmige Rippen aufweist, durch die das einfließende Rohöl in spiralförmige Bewegung gebracht wird, um eine zentrifugal wirkende Abscheidung von schwereren verunreinigenden Partikeln zu bewirken, die in einen Schmutzstoffbehälter unten im Filtergehäuse der Ölfiltereinrichtung geleitet werden.

Des Weiteren beschreibt die EP 0 221 675 B1 einen als Ölfilter ausgebildeten Fluidfilter. Der Fluidfilter wird mit einem an einem Motor ausgebildeten Filterhalter verschraubt. Hierfür sind an einer Innenseite einer Wand eines Gehäuses des Fluidfilters vier nach innen vorspringende Laschen ausgebildet. Auf Seiten des Filterhalters sind ebenfalls vier Laschen vorgesehen, welche jedoch demgegenüber bezogen auf eine Mittelachse des Fluidfilters nach außen vorspringen. Zur Montage des Fluidfilters werden die nach innen vorspringenden Laschen zwischen die nach außen vorspringenden Laschen eingesetzt. Dann wird der Fluidfilter ein Stück weit gedreht, sodass die nach innen vorspringenden Laschen die nach außen vorspringenden Laschen hintergreifen.

Als nachteilig ist hierbei der Umstand anzusehen, dass der Fluidfilter sehr genau relativ zu dem Filterhalter positioniert werden muss, um den Fluidfilter korrekt an dem Filterhalter befestigen zu können.

Des Weiteren ist nachteilig, dass die als Verriegelungselemente dienenden Laschen lediglich über die Hälfte eines Umfangs des Gehäuses der Filterkartusche Haltekräfte übertragen können. Denn für die Montage und die Demontage ist es erforderlich dafür zu sorgen, dass die auf Seiten der Filterkartusche vorgesehenen vier Laschen nicht mit den auf Seiten des Filterhalters vorgesehenen vier Laschen in Überdeckung sind.

Aufgabe der vorliegenden Erfindung ist es daher, einen Fluidfilter der eingangs genannten Art zu schaffen, bei welchem eine besonders einfache Montage der Filterkartusche erreicht ist, und eine entsprechend einfach montierbare Filterkartusche anzugeben.

Diese Aufgabe wird durch einen Fluidfilter mit den Merkmalen des Patentanspruchs 1 und durch eine Filterkartusche mit den Merkmalen des Patentanspruchs 4 gelöst. Vorteilhafte Ausgestaltungen mit zweckmäßigen Weiterbildungen der Erfindung sind in den abhängigen Patentansprüchen angegeben.

Der erfindungsgemäße Fluidfilter für einen Kraftwagen umfasst eine Filterkartusche, welche in einem Filtergehäuse des Fluidfilters angeordnet ist. Das Filtergehäuse umfasst einen Gehäusetopf und ein Deckelelement. Die Filterkartusche weist ein Filtermaterial auf. Durch Drehen um eine Längsachse der Filterkartusche ist die Filterkartusche mit dem Gehäusetopf des Filtergehäuses verbindbar. An einer Endplatte der Filterkartusche ist ein Halteelement angeordnet, welches einen Steg umfasst. Der Steg steht von einer Wand des Halteelements ab. Die Wand des Halteelements ist radial zur Längsachse spiralförmig ausgebildet. In einer Montagestellung der Filterkartusche hintergreift der Steg des Halteelements einen Haltesteg. Der Haltesteg steht von einer radial zur Längsachse spiralförmigen Wand eines an dem Gehäusetopf angeordneten Widerlagers ab.

Es ist also auf Seiten der Filterkartusche das in Richtung der Längsachse spiralförmige Halteelement vorgesehen und auf Seiten des Gehäusetopfs des Filtergehäuses das in Richtung der Längsachse spiralförmige Widerlager. Hierdurch ist eine besonders einfache Montage der Filterkartusche erreicht. Denn es braucht lediglich der Steg des Halteelements der Filterkartusche so relativ zu dem Haltesteg des Widerlagers positioniert zu werden, dass infolge des Drehens der Filterkartusche um die Längsachse der Filterkartusche der Steg des Halteelements den Haltesteg des Widerlagers hintergreift.

Das Drehen der Filterkartusche um die Längsachse führt einerseits dazu, dass in der Montagestellung der Filterkartusche die Filterkartusche mit dem Gehäusetopf beziehungsweise einem derartigen ersten Gehäuseteil des Filtergehäuses verbunden ist. Andererseits wird so eine korrekte Ausrichtung der Filterkartusche bezogen auf das Filtergehäuse erreicht. Nach dem hinterschnittigen Verbinden des Tauschteils in Form der Filterkartusche mit dem Gehäusetopf des Filtergehäuses kann das Deckelement beziehungsweise der Deckel oder ein derartiges zweites Gehäuseteil des Filtergehäuses montiert werden, um das Filtergehäuse des Fluidfilters zu verschließen.

Insbesondere bei einer Montage über Kopf braucht demnach die Filterkartusche nicht händisch oder mittels eines Behelfs fixiert zu werden, bevor das Deckelelement mit dem Gehäusetopf des Filtergehäuses verbunden wird. Denn die Filterkartusche hält bereits durch das Hintergreifen des Haltestegs an dem Gehäusetopf. Bei einem Einbau der Filterkartusche in das Filtergehäuse über Kopf ist somit eine Lagefixierung der Filterkartusche gegeben, sobald das die Spiralform aufweisende Halteelement der Filterkartusche mit dem die Spiralform aufweisenden Widerlager verbunden ist, welches auf Seiten des Gehäusetopfs vorgesehen ist. Je nach Ausführung des Halteelements kann eine Länge des spiralförmigen Halteelements - im Gegensatz beispielsweise zu einem Bajonettverschluss - einen größer als die Hälfte eines Umfangs der Filterkartusche sein oder sogar größer als der Umfang. So lässt sich eine besonders sichere und dicht sitzende Festlegung der Filterkartusche an dem Filtergehäuse erreichen.

Durch die Ausbildung des Halteelements mit der spiralförmig ausgebildeten Wand und dem von der Wand nach Art eines Flansches abstehenden Steg ist das Halteelement im Querschnitt hakenförmig ausgebildet, sodass durch das Halteelement eine Spanngeometrie und Haltegeometrie bereitgestellt ist. Insbesondere der als Spanngeometrie beziehungsweise Haltegeometrie dienende Steg des Halteelements wird vorliegend bei einem Austausch der Filterkartusche zusammen mit der Filterkartusche erneuert. So kann dem Umstand Rechnung getragen werden, dass das Halteelement der Filterkartusche einem Verschleiß unterliegt.

Aufgrund der flachen beziehungsweise ebenen Ausführung der hier beschriebenen Verbindung von Filterkartusche mit dem Filtergehäuse beziehungsweise zwischen Widerlager und Halteelement, bei welcher des Haltesteg des Widerlagers seitens des Gehäuses und der Steg des Halteelements seitens der Filterkartusche jeweils in konstantem Abstand zum Boden des Filtergehäusetopfs bzw. zur Endplatte der Kartusche angebracht sind, steht innerhalb des Filtergehäuses besonders viel Bauraum zur Verfügung, welcher von dem Filtermaterial in der Filterkartusche eingenommen werden kann. Bei einer Festlegung einer Filterkartusche an einem Gehäusetopf durch Einschrauben eines Schraubelements der Filterkartusche in eine auf Seiten des Gehäusetopfs vorgesehene, ein korrespondierendes Gewinde aufweisende Aufnahme stünde demgegenüber weniger Bauraum in Richtung der Längsachse der Filterkartusche zur Verfügung, welcher von dem Filtermaterial der Filterkartusche eingenommen werden könnte.

Je nach Einsatzzweck und Ausgestaltung des Fluidfilters können unterschiedliche Fluide mittels des Filtermaterials der Filterkartusche gefiltert werden. So kann der Fluidfilter als Luftfilter einer Klimaanlage oder Belüftungsanlage des Kraftwagens ausgebildet sein, mittels welchem Umgebungsluft vor ihrem Eintreten in einen Fahrgastraum des Kraftwagens gefiltert werden kann. Der Fluidfilter kann jedoch auch als Luftfilter einer Verbrennungskraftmaschine des Kraftwagens ausgebildet sein oder als Filter zum Filtern von Kraftstoff. Des Weiteren ist es möglich, dass der Fluidfilter als Ölfilter ausgebildet ist oder als Wasserabscheider zum Abscheiden von Wasser aus einem Schmierstoff und/oder einem Kraftstoff. Darüber hinaus ist es möglich, dass der Fluidfilter als Lufttrockner ausgebildet ist, mittels welchem sich die Feuchte in einem Luft, insbesondere Druckluft, enthaltenden System des Kraftwagens, etwa der Druckluft in einer Bremsanlage, verringern lässt.

Vorzugsweise ist das Widerlager einstückig mit dem Gehäusetopf ausgebildet. Auf diese Weise kann ein besonders robustes Widerlager auf Seiten des Filtergehäuses bereitgestellt werden.

Insbesondere kann der Gehäusetopf einen Boden und eine Mantelwand aufweisen. Dann ist vorzugsweise das Widerlager einstückig mit dem Boden des Gehäusetopfs ausgebildet. Dementsprechend befindet sich bei in das Filtergehäuse eingebauter Filterkartusche die Endplatte der Filterkartusche, an welcher das Halteelement angeordnet ist, in großer Nähe zu dem Boden des Gehäusetopfs. Folglich kann dann innerhalb des Filtergehäuses von dem Filtermaterial besonders viel Raum in Richtung der Längsachse der Filterkartusche eingenommen werden. Dies führt zu einem niedrigen Druckverlust beim Hindurchtreten eines Fluids durch das Filtermaterial.

Der Gehäusetopf kann eine Aufnahme für wenigstens einen an dem Deckelelement angeordneten Vorsprung aufweisen. Hierbei ist durch Eingreifen des wenigstens einen Vorsprungs in die Aufnahme eine Montageorientierung des Deckelelements relativ zu dem Gehäusetopf vorgegeben. Dies ist einem präzisen und prozesssicheren Anbringen des Deckelelements an dem Gehäusetopf zuträglich.

Als weiter vorteilhaft hat es sich gezeigt, wenn an dem Deckelelement eine Nut ausgebildet ist, in welcher bei an den Gehäusetopf montiertem Deckelelement ein stirnseitiger Rand einer Wand des Gehäusetopfs aufgenommen ist. Auf diese Weise ist ein dichter Sitz des Deckelelements oder Deckels an dem Gehäusetopf des Filtergehäuses erreichbar. Dies gilt insbesondere, wenn an einem Grund der Nut und/oder an dem stirnseitigen Rand der Wand zusätzlich ein Dichtelement angeordnet ist.

Die erfindungsgemäße Filterkartusche für einen Fluidfilter eines Kraftwagens kann in einem Filtergehäuse des Fluidfilters angeordnet werden, welches einen Gehäusetopf und ein Deckelelement umfasst. Die Filterkartusche weist ein Filtermaterial auf. Die Filterkartusche ist durch Drehen um eine Längsachse der Filterkartusche mit dem Gehäusetopf des Filtergehäuses verbindbar. An einer Endplatte der Filterkartusche ist ein Halteelement mit einem Steg angeordnet. Der Steg steht von einer Wand des Halteelements ab. Die Wand des Halteelements ist radial zur Längsachse spiralförmig ausgebildet. Der Steg des Halteelements ist dazu ausgebildet, in einer Montagestellung der Filterkartusche einen Haltesteg zu hintergreifen. Der Haltesteg steht von einer radial zur Längsachse spiralförmigen Wand eines an dem Boden des Gehäusetopfs angeordneten Widerlagers ab.

Eine derartige Filterkartusche lässt sich besonders einfach montieren, indem dafür gesorgt wird, dass der Steg des Halteelements den Haltesteg des Widerlagers hintergreift. Dies kann durch Drehen der Filterkartusche die Längsachse der Filterkartusche erreicht werden. Durch das Hintergreifen des Haltestegs des Widerlagers mit dem Steg des Halteelements der Filterkartusche ist eine Fixierung der Filterkartusche an dem Gehäusetopf erreichbar, bevor das Deckelelement mit dem Gehäusetopf verbunden und dadurch das Filtergehäuse des Fluidfilters geschlossen ist. Dies ist insbesondere dann vorteilhaft, wenn die Filterkartusche über Kopf verbaut wird, also über Kopf an dem Gehäusetopf festzulegen ist.

Wie bereits oben zum Fluidfilter bzw. zur Fluidfiltereinrichtung als Gesamtheit ausgeführt, steht, aufgrund der flachen beziehungsweise ebenen Ausführung der Verbindung des Widerlagers des Filtergehäuses mit dem Halteelement der Filterkartusche, bei welcher der Haltesteg des Widerlagers und der Steg des Halteelements jeweils in konstantem Abstand zum Boden des Gehäusetopfs bzw. zur Endplatte der Filterkartusche angebracht sind, innerhalb des Filtergehäuses besonders viel Bauraum für die Nutzung durch Filtermaterial zur Verfügung. Das heißt, ein Abstand des Stegs des Halteelements ist von einer dem Filtermaterial abgewandten Oberfläche der Endplatte in Umfangsrichtung der Filterkartusche beziehungsweise in Umfangsrichtung der der Filterkartusche konstant.

Die Filterkartusche kann insbesondere einen Kanal aufweisen, welcher in radialer Richtung zumindest bereichsweise von dem Filtermaterial der Filterkartusche umgeben ist. Dann fällt eine Längsachse des Kanals vorzugsweise mit der Längsachse der Filterkartusche zusammen. Durch eine derartige Filterkartusche lassen sich vergleichsweise gut definierte Strömungswege für das Fluid beim Durchströmen der Filterkartusche vorgeben.

Vorzugsweise weist die Filterkartusche in einem dem Halteelement gegenüberliegenden Endbereich wenigstens ein Befestigungsauge auf, in welches zum Befestigen des Deckelelements an der Filterkartusche ein Befestigungselement einbringbar ist. Das Befestigungselement ist hierbei durch eine Durchtrittsöffnung hindurchführbar, welche in dem Deckelelement ausgebildet ist. Durch das Vorsehen des wenigstens einen Befestigungsauges auf Seiten der Filterkartusche kann sichergestellt werden, dass das Deckelelement lediglich dann mit dem Gehäusetopf verbunden werden kann, wenn tatsächlich eine Filterkartusche in das Filtergehäuse eingebaut ist. Denn anders als über die Filterkartusche lässt sich das Deckelelement nicht mit dem Gehäusetopf des Filtergehäuses verbinden. Das wenigstens eine Befestigungsauge dient somit auch dem mittelbaren Befestigen des Deckelelements an dem Gehäusetopf des Filtergehäuses über die Filterkartusche.

Durch diese Ausgestaltung der Filterkartusche kann also erreicht werden, dass der Fluidfilter nur mit eingebauter Filterkartusche betrieben werden kann. Denn eine Montage des Deckelelements oder Gehäusedeckels ist dann ohne das Anordnen der Filterkartusche in dem Filtergehäuse nicht möglich. Auf diese Weise kann sichergestellt werden, dass das zu filternde Fluid im Betrieb des Fluidfilters auch tatsächlich aufgrund eines Hindurchtretens durch das Filtermaterial oder Filtermedium der Filterkartusche gereinigt wird. Zudem kann so sichergestellt werden, dass ein Einbau der Filterkartusche nicht versehentlich vergessen wird.

Des Weiteren ist hierbei vorteilhaft, dass das wenigstens eine in das Befestigungsauge einbringbare Befestigungselement bei mit dem Gehäusetopf verbundenem Deckelelement somit größtenteils innerhalb des Filtergehäuses angeordnet ist. Denn dann wird außerhalb des Filtergehäuses kein Bauraum von einem derartigen Befestigungselement beansprucht, welches insbesondere als Befestigungsschraube ausgebildet sein kann. Dadurch steht beispielsweise in einem Motorraum des Kraftwagens mehr Bauraum zur Verfügung.

Das wenigstens eine Befestigungsauge kann durch ein in einem Sockel ausgebildetes Loch bereitgestellt sein. Dann braucht lediglich im Bereich des Sockels ausreichend Material zum Ausbilden des Lochs vorgesehen zu werden. Dies ist im Hinblick auf ein geringes Gewicht der Filterkartusche vorteilhaft.

Der Sockel kann ein Gewinde aufweisen, etwa wenn das Befestigungselement als Befestigungsschraube ausgebildet ist. Es kann jedoch auch vorgesehen sein, dass die Befestigungsschraube in den Sockel ein Gewinde schneidet beziehungsweise furcht, wenn die Befestigungsschraube in das Loch hineingedreht wird. Das Vorsehen eines erst beim Einschrauben der Befestigungsschraube in das Loch gebildeten Gewindes ist vorliegend unproblematisch, da die Filterkartusche und somit das wenigstens eine Befestigungsauge bei einem Nachlassen der Filterleistung der Filterkartusche ausgetauscht wird. Mit dem Verschleiß eines selbstgefurchten oder selbstschneidenden Gewindes einhergehende Probleme sind folglich vorliegend vermieden.

Ein besonders guter Sitz des Befestigungselements in dem wenigstens einen Befestigungsauge ist erreichbar, wenn das Befestigungsauge durch ein in dem Sockel ausgebildetes Sackloch bereitgestellt ist.

Vorzugsweise ist der wenigstens eine Sockel einstückig mit einer weiteren Endplatte der Filterkartusche ausgebildet. Dadurch lässt sich der Sockel besonders aufwandsarm und robust beziehungsweise belastbar bereitstellen.

Die weitere Endplatte kann insbesondere einen Durchlass aufweisen, welcher mit einem Kanal der Filterkartusche korrespondiert. Der Kanal kann in radialer Richtung zumindest bereichsweise von dem Filtermaterial der Filterkartusche umgeben sein. Über diesen Durchlass kann zu filterndes Medium in den Kanal gelangen, wenn das Medium beziehungsweise Fluid bei einem Hindurchtreten in radialer Richtung durch das Filtermaterial der Filterkartusche nach außen gereinigt wird. Wenn demgegenüber das ungefilterte Medium beziehungsweise Fluid von außen nach innen durch das Filtermaterial hindurch in den Kanal eintritt, so kann der in der weiteren Endplatte vorgesehene Durchlass als Auslass für das gefilterte Fluid beziehungsweise gefilterte Medium vorgesehen sein.

Vorzugsweise weist die Filterkartusche eine Mehrzahl der Befestigungsaugen auf. Auf diese Weise kann eine definierte Montageposition des Deckelelements an dem Gehäusetopf vorgegeben werden. Zudem lässt sich so eine gleichmäßige Kraftbeaufschlagung beim Festlegen des Deckelelements an der Filterkartusche mittels einer entsprechenden Mehrzahl an Befestigungselementen erreichen. Dies gilt insbesondere, wenn die Befestigungsaugen in Umfangsrichtung der Filterkartusche gleichmäßig voneinander beabstandet sind.

Vorzugsweise nimmt ein Krümmungsradius des Halteelements von einem Zentrum einer Spiralform der Wand des Halteelements hin zu einem Rand der Spiralform zu. Dadurch lässt sich beim Festlegen der Filterkartusche an dem Gehäusetopf die Filterkartusche zunächst besonders einfach um die Längsachse drehen. Mit zunehmendem Drehen um die Längsachse und somit dem Verbringen der Filterkartusche in die Montagestellung hintergreift dann der Steg des Halteelements den Haltesteg des Widerlagers zunehmend weiter. Dies ermöglicht es einer die Montage der Filterkartusche vornehmenden Person, etwa einem Monteur, das Erreichen der Montagestellung der Filterkartusche festzustellen. Dennoch lässt sich die Filterkartusche zunächst sehr leicht um die Längsachse der Filterkartusche drehen. Und in der Montagestellung der Filterkartusche ist eine sehr belastbare Befestigung der Filterkartusche an dem Gehäusetopf erreichbar beziehungsweise erreicht.

Vorzugsweise ist das Halteelement einstückig mit der Endplatte der Filterkartusche ausgebildet. So lässt sich das Halteelement auf einfache und kostengünstige Art und Weise bereitstellen. Zudem kann so dem Halteelement auf einfache Weise die erforderliche Robustheit beziehungsweise Belastbarkeit verliehen werden.

Die Endplatte der Filterkartusche kann insbesondere geschlossen ausgebildet sein. Dadurch kann die Endplatte einer Zugbelastung besonders gut widerstehen, welche bei in dem Filtergehäuse angeordneter Filterkartusche auf den Steg des Halteelements der Filterkartusche wirken kann.

Vorzugsweise ist an einem äußeren Ende des Halteelements ein Anschlag ausgebildet, welcher durch das Drehen der Filterkartusche um die Längsachse mit einem äußeren Ende des Widerlagers in Anlage bringbar ist. Dadurch ist einer die Montage der Filterkartusche in das Filtergehäuse vornehmenden Person, etwa einem Monteur, auf einfache Weise vermittelbar, wann die Filterkartusche die Montagestellung erreicht hat. Dies ist nämlich dann der Fall, wenn der Anschlag, welcher an dem bezogen auf die Spiralform der Wand des Halteelements äußeren Ende des Halteelements ausgebildet ist, an dem äußeren Ende des Widerlagers anliegt.

Ein Kanal der Filterkartusche, welcher in radialer Richtung zumindest bereichsweise von dem Filtermaterial der Filterkartusche umgeben ist, kann als Stützrohr ausgebildet sein, welches eine Mehrzahl von Durchtrittsöffnungen aufweist. Auf diese Weise sorgt der Kanal dafür, dass bei einem Hindurchtreten von zu filterndem Medium beziehungsweise Fluid über die Durchtrittsöffnungen in das Innere des Stützrohrs das den Kanal umgebende Filtermaterial nicht kollabiert beziehungsweise das Filtermaterial abgestützt wird. So kann die Filterkartusche ihre Filterfunktion besonders langfristig erfüllen.

Als weiter vorteilhaft hat es sich gezeigt, wenn ein Endbereich eines Kanals der Filterkartusche in Richtung der Längsachse über eine weitere Endplatte der Filterkartusche übersteht. Der Kanal ist in radialer Richtung zumindest bereichsweise von dem Filtermaterial der Filterkartusche umgeben. Hierbei ist in den Endbereich des Kanals ein rohrförmiger Stutzen des Deckelelements einführbar. Auf diese Weise ist das Anbringen des Deckelelements an dem Gehäusetopf des Filtergehäuses besonders leicht zu bewerkstelligen. Denn der über die Endplatte der Filterkartusche überstehende Endbereich des Kanals gibt eine Position des Deckelements bei der Montage vor.

Das Halteelement kann in Umfangsrichtung der Filterkartusche eine Mehrzahl von Durchbrüchen aufweisen. Mit anderen Worten braucht das die Spiralform aufweisende Halteelement nicht als durchgängige Spirale ausgebildet zu sein. Vielmehr können einzelne Abschnitte radial zur Längsachse spiralförmigen Wand des Halteelements die Spiralform bilden. Dementsprechend ist auch der von der Wand abstehende Steg nicht durchgängig ausgebildet, sondern jeder Abschnitt der Wand weist einen von diesem Abschnitt abstehenden Stegabschnitt des Halteelements auf. Auch dann beschreiben jedoch weiterhin die Abschnitte der Wand die Spiralform, so dass die Durchbrüche aufweisende Wand des Halteelements spiralförmig ausgebildet ist. Eine derartige, unterbrochene oder segmentierte Spiralform des Halteelements ist im Hinblick auf ein geringes Gewicht der Filterkartusche vorteilhaft.

Die für den erfindungsgemäßen Fluidfilter beschriebenen Vorteile und bevorzugten Ausführungsformen gelten auch für die erfindungsgemäße Filterkartusche und umgekehrt.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: in einer teilweise geschnittenen Perspektivansicht einen als Luftfilter ausgebildeten Fluidfilter für einen Kraftwagen;
- Fig. 2: in einer Explosionsdarstellung Komponenten des Fluidfilters gemäß Fig. 1;
- Fig. 3: perspektivisch eine Filterkartusche des Fluidfilters gemäß Fig. 1;
- Fig. 4: ausschnittsweise eine Variante der Filterkartusche des Fluidfilters gemäß Fig. 1;
- Fig. 5: in einer Draufsicht von oben einen Gehäusetopf eines Filtergehäuses des Fluidfilters gemäß Fig. 1;
- Fig. 6: eine teilweise geschnittene Perspektivansicht des Gehäusetopfs gemäß Fig. 5;
- Fig. 7: das Einsetzen der Filterkartusche in den Gehäusetopf;
- Fig. 8: das Verdrehen der Filterkartusche um die Längsachse zum Zwecke des Befestigens der Filterkartusche an dem Gehäusetopf;
- Fig. 9: das weitere Verdrehen der Filterkartusche um die Längsachse;
- Fig. 10: die durch das Verdrehen in ihre Montagestellung in dem Gehäusetopf verbrachte Filterkartusche;
- Fig. 11: eine weitere Perspektivansicht der Filterkartusche;
- Fig. 12: teilweise geschnitten ein Deckelelement des Filtergehäuses sowie Befestigungsschrauben zum Befestigen des Deckelelements an der Filterkartusche;
- Fig. 13: eine weitere Perspektivansicht des Gehäusetopfs des Filtergehäuses;
- Fig. 14: das Anbringen des Deckelelements an dem Gehäusetopf, wobei die Filterkartusche in dem Gehäusetopf aufgenommen ist, und wobei die Befestigungsschrauben in Schraubsockel eingeschraubt werden, welche an der Filterkartusche ausgebildet sind;
- Fig. 15: den Fluidfilter mit geschlossenem Deckelelement; und
- Fig. 16: ausschnittsweise eine Schnittdarstellung des Fluidfilters gemäß Fig. 1.

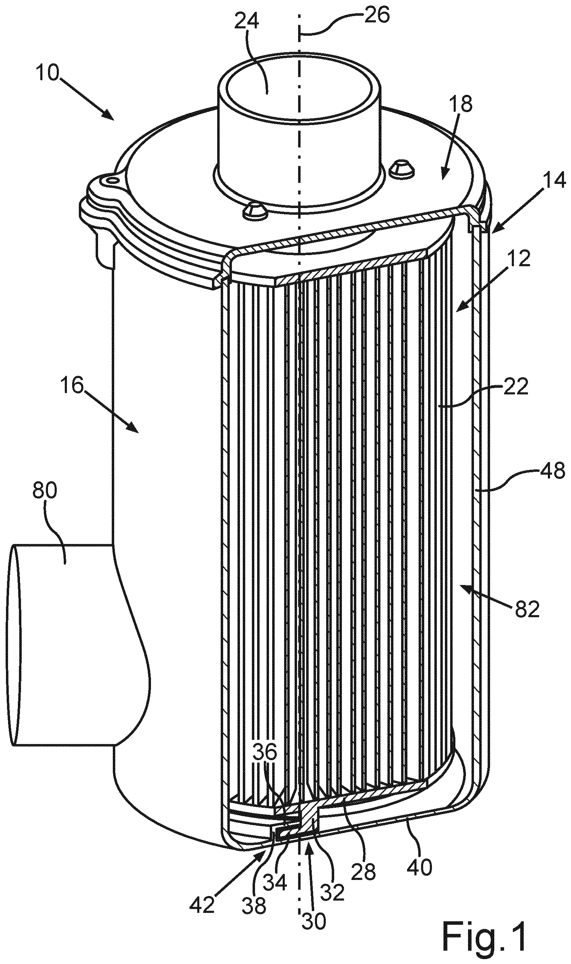

In Fig. 1 ist in einer geschnittenen Perspektivansicht ein Fluidfilter 10 für einen Kraftwagen gezeigt, welcher beispielhaft als Luftfilter ausgebildet ist. Der Fluidfilter 10 kann jedoch auch als Kraftstofffilter, als Ölfilter oder dergleichen Fluidfilter 10 ausgebildet sein.

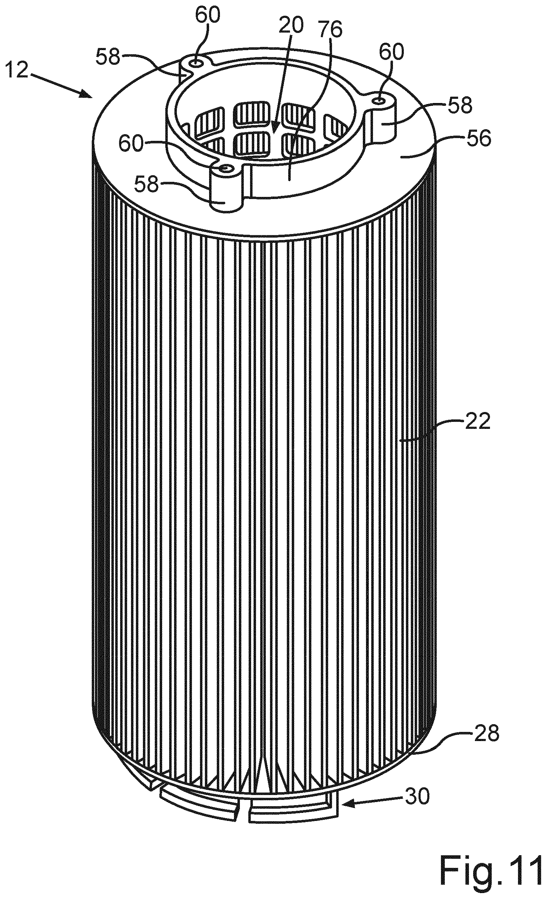

Der Fluidfilter 10 umfasst eine Filterkartusche 12, die in einem Filtergehäuse 14 des Fluidfilters 10 angeordnet ist. Das Filtergehäuse 14 umfasst einen vorliegend topfförmig ausgebildeten Grundkörper beziehungsweise Gehäusetopf 16 und ein Deckelelement beziehungsweise einen Deckel 18, durch welchen ein von dem Gehäusetopf 16 bereitgestellter Aufnahmeraum für die Filterkartusche 12 verschlossen ist. Die Filterkartusche 12 umfasst vorliegend einen Kanal 20 (vergleiche Fig. 11), welcher in radialer Richtung von einem Filtermaterial 22 umgeben ist. Wenn die Filterkartusche 12 keinen derartigen Kanal 20 aufweist, kann das Filtermaterial 22 auf andere Art und Weise in einem Aufnahmeraum der Filterkartusche 12 angeordnet sein.

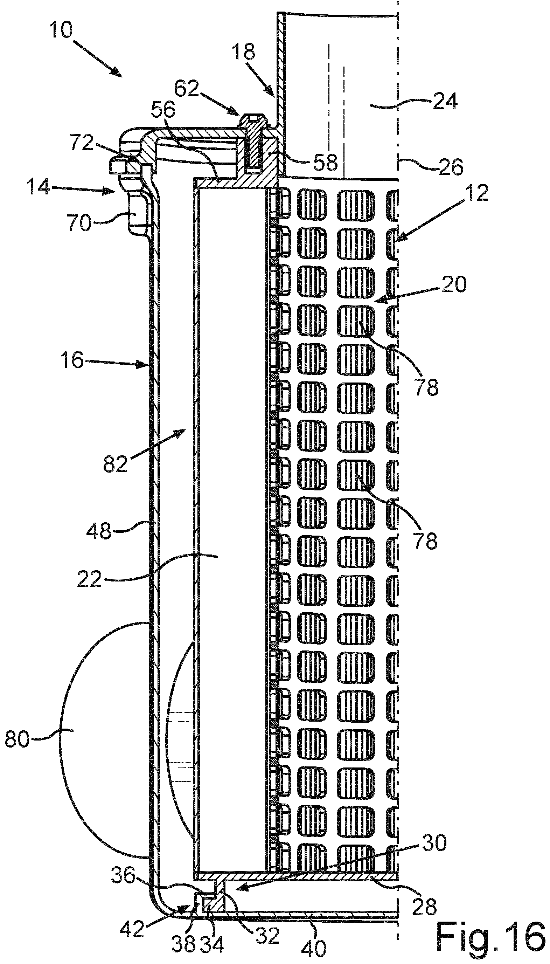

Das Filtermaterial 22 kann, wie vorliegend beispielhaft gezeigt, als Faltenfilter ausgebildet sein. Durch das Filtermaterial 22 hindurch kann ein zu filterndes Fluid, bei der Ausbildung des Fluidfilters 10 als Luftfilter also beispielsweise zu filternde Luft, aus einem innerhalb des Filtergehäuses 14 um das Filtermaterial 22 herum vorhandenen Ringraum 82 (vergleiche Fig. 16) in den Kanal 20 eintreten. Die gefilterte Luft kann dann den Fluidfilter 10 über einen Stutzen 24 des Deckels 18 verlassen.

Eine Längsachse 26 des Kanals 20 fällt vorliegend mit einer Längsachse der Filterkartusche 12 zusammen. Durch Drehen der Filterkartusche 12 um diese Längsachse 26 kann die Filterkartusche 12 mit dem Gehäusetopf 16 des Filtergehäuses 14 verbunden werden. Dies soll mit Bezug auf die nachfolgenden Figuren näher erläutert werden.

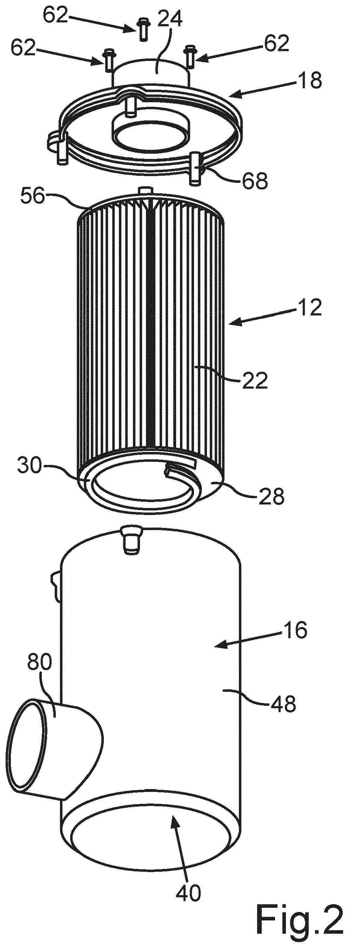

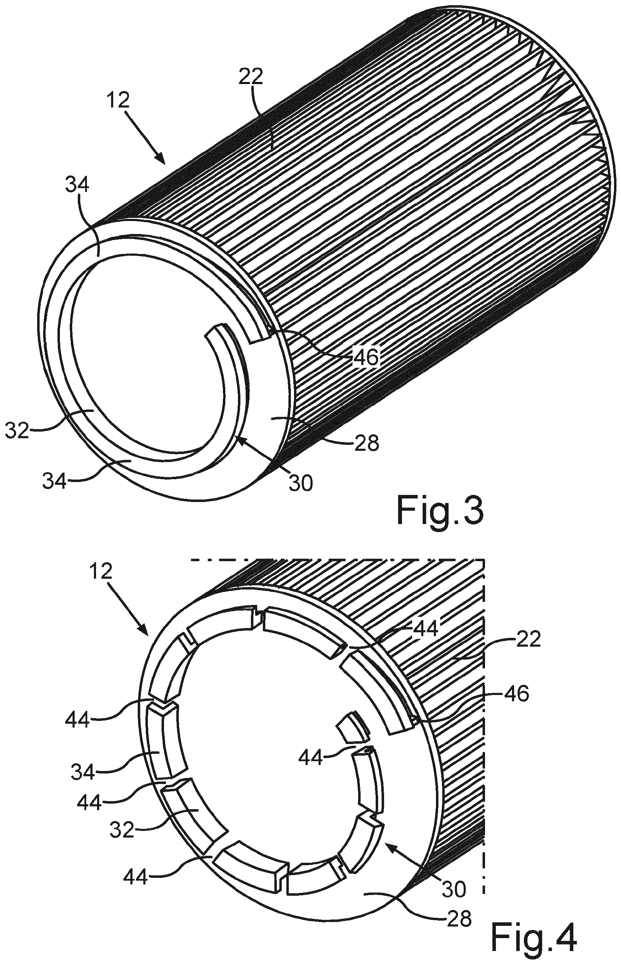

In Fig. 2 ist der Deckel 18 von der Filterkartusche 12 gelöst und von dem Gehäusetopf 16 abgenommen gezeigt. Des Weiteren ist aus Fig. 2, jedoch besser noch aus Fig. 3, ersichtlich, dass die Filterkartusche 12 eine erste, vorliegend untere Endplatte 28 aufweist. Einstückig mit dieser Endplatte 28 ist ein Halteelement 30 beziehungsweise Montageelement ausgebildet, welches eine Spiralform aufweist. Die Komponenten oder Teilbereiche des Halteelements 30 sind in Fig. 3 besser zu erkennen. So umfasst das Halteelement 30 eine in Richtung der Längsachse 26 von der Endplatte 28 abstehende Wand 32. Diese Wand 32 ist radial zur Längsachse 26 spiralförmig ausgebildet. Von der Wand 32 steht in radialer Richtung nach außen ein Flansch oder Steg 34 ab. Eine flache Bauweise des Halteelements 30 wird durch einen konstanten Abstand des Stegs 34 von der Endplatte 28 beziehungsweise durch eine gleichmäßig hohe, von der Endplatte 28 abstehende Wand 32 erreicht.

In Fig. 1 ist das die Spiralform aufweisende Halteelement 30 geschnitten gezeigt. Aus dieser Darstellung in Fig. 1 ist des Weiteren gut ersichtlich, dass der Steg 34 des Halteelements 30 in einer in Fig. 1 gezeigten Montagestellung der Filterkartusche 12 einen Haltesteg 36 hintergreift, welcher auf Seiten des Gehäusetopfs 16 vorgesehen ist. Dieser Haltesteg 36 steht von einer Wand 38 ab, welche an einem Boden 40 des Gehäusetopfs 16 angeordnet ist. Der Haltesteg 36 bildet zusammen mit der Wand 38 ein Widerlager 42 für das Halteelement 30 der Filterkartusche 12. Vorliegend ist dieses Widerlager 42 einstückig mit dem Boden 40 des Gehäusetopfs 16 ausgebildet.

Von der Wand 38 des Widerlagers 42 steht der Haltesteg 36 in radialer Richtung nach innen ab. Demgegenüber steht der Steg 34 des Halteelements 30 von der Wand 32 des Halteelements 30 in radialer Richtung nach außen ab. Dementsprechend hintergreift in der in Fig. 1 gezeigten Montagestellung der Filterkartusche 12 der Steg 34 des Halteelements 30 den Haltesteg 36 des Widerlagers 42.

In Fig. 4 ist eine Variante der Filterkartusche 12 ausschnittsweise gezeigt. Aus der Darstellung in Fig. 4 ist ersichtlich, dass das spiralförmige Halteelement 30 nicht durchgängig ausgebildet zu sein braucht. Vielmehr kann das Halteelement 30 in Umfangsrichtung der Filterkartusche 12 eine Mehrzahl von Durchbrüchen 44 aufweisen, von welchen in Fig. 4 nur einige mit einem Bezugszeichen versehen sind. Aus Fig. 3 und aus Fig. 4 ist des Weiteren ersichtlich, dass das die Spiralform aufweisende Halteelement 30 vorliegend nur etwas mehr als eine vollständige Windung aufweist. Dies ist einer einfachen Montage der Filterkartusche 12 zuträglich.

Des Weiteren ist aus Fig. 3 und aus Fig. 4 entnehmbar, dass an einem in radialer Richtung äußeren Ende des Halteelements 30 ein Anschlag 46 ausgebildet ist. Die ansonsten im Querschnitt eine Hakenform aufweisende Gestalt des Halteelements 30 ist sowohl aus der in Fig. 3 gezeigten Variante der Filterkartusche 12 als auch aus der in Fig. 4 gezeigten Variante der Filterkartusche 12 gut ersichtlich.

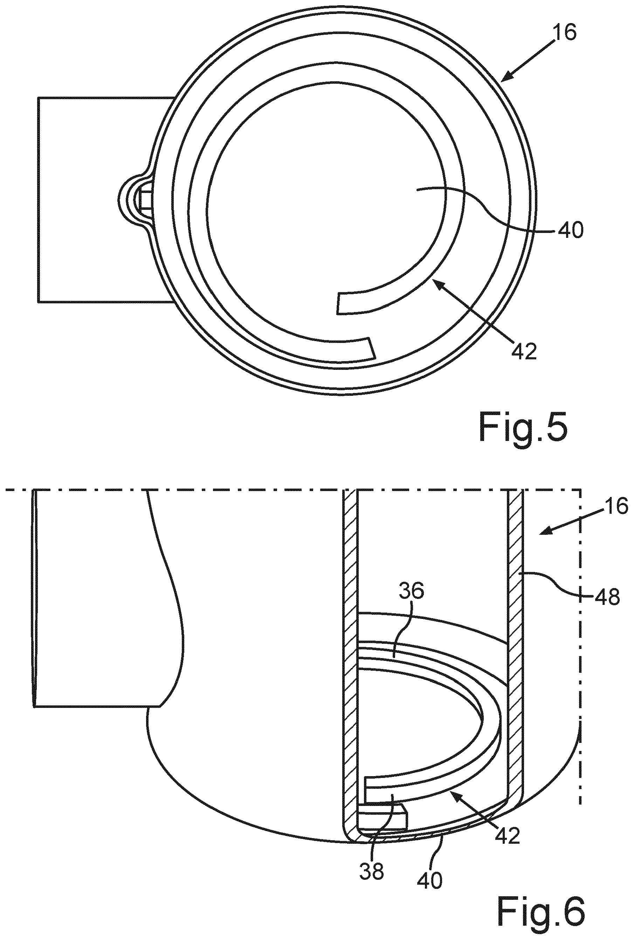

Insbesondere aus der Draufsicht in Richtung der Längsachse 26 auf den Gehäusetopf 16 in Fig. 5 ist die Spiralform des Widerlagers 42 gut erkennbar, welches einstückig mit dem Boden 40 des Gehäusetopfs 16 ausgebildet ist. Auch das spiralförmige Widerlager 42 weist lediglich etwas mehr als eine vollständige Windung auf.

Aus Fig. 6, in welcher eine Mantelwand 48 des Gehäusetopfs 16 geschnitten gezeigt ist, ist das Abstehen des Haltestegs 36 von der die Spiralform aufweisenden Wand 38 des Widerlagers 42 in radialer Richtung nach innen gut erkennbar. Eine flache Bauweise des Widerlagers wird durch einen konstanten Abstand des Haltestegs 36 vom Boden 40 des Gehäusetopfs 16 beziehungsweise durch eine gleichmäßig hohe, vom Boden 40 abstehende Wand 38 erreicht.

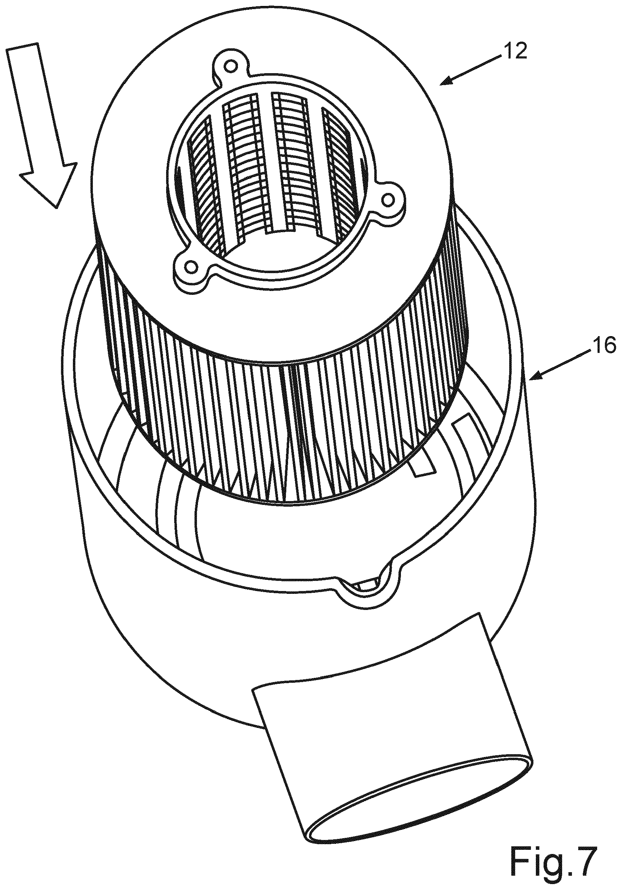

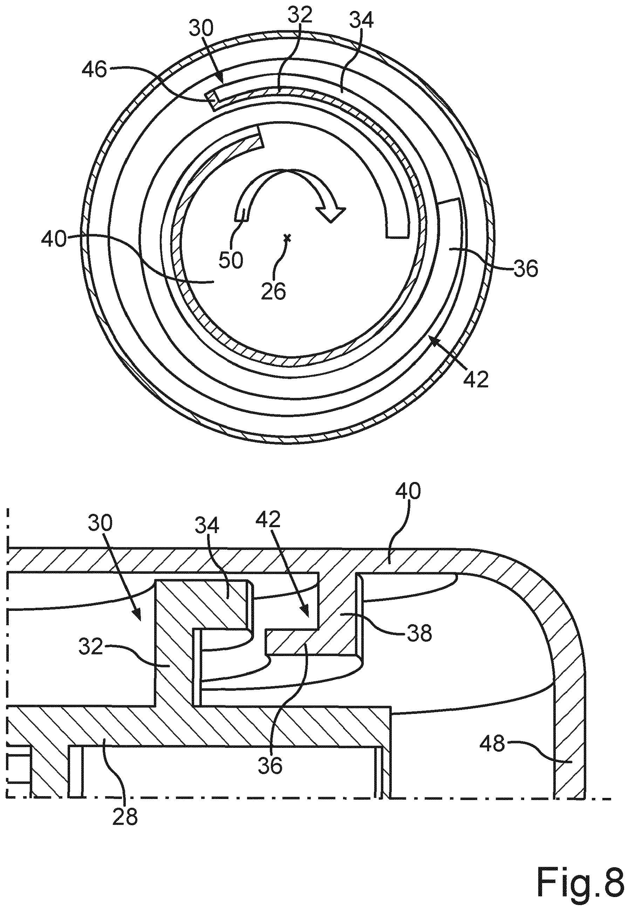

Anhand von Fig. 7 bis Fig. 10 soll nun die Montage der Filterkartusche 12 an den Gehäusetopf 16 veranschaulicht werden. Zunächst wird demnach die Filterkartusche 12 in Richtung der Längsachse 26 in den Gehäusetopf 16 beziehungsweise ein derartiges, insbesondere topfförmiges, Gehäuseunterteil des Filtergehäuses 14 eingesetzt. In einer in Fig. 8 oberen Darstellung ist das Halteelement 30 knapp oberhalb des Bodens 40 des Gehäusetopfs 16 geschnitten dargestellt. Erkennbar ist dadurch der in radialer Richtung nach außen von der Wand 32 des Halteelements 30 abstehende Steg 34. Dieser Steg 34 befindet sich in der in Fig. 8 oben gezeigten Ausgangsposition noch nicht in Überlappung mit dem Haltesteg 36 des Widerlagers 42. Dies ist auch aus der in Fig. 8 unten gezeigten Schnittdarstellung gut ersichtlich. Wird jedoch die Filterkartusche 12 um die Längsachse 26 weitergedreht, wie dies in der in Fig. 8 oberen Darstellung durch einen Pfeil 50 veranschaulicht ist, so gelangt der Steg 34 zunehmend mehr in Überlappung mit dem Haltesteg 36.

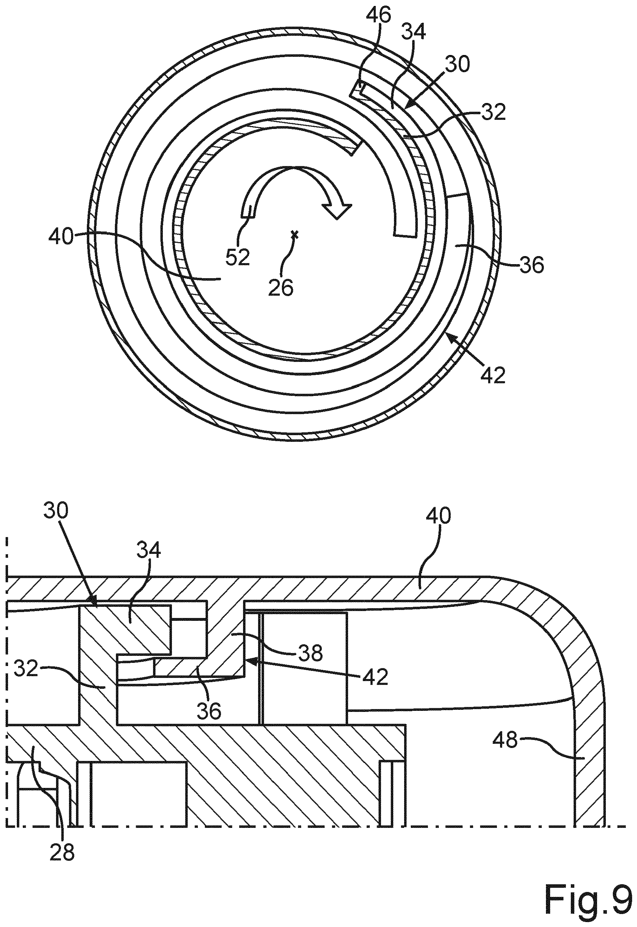

Dieses beginnende Verhaken der Filterkartusche 12 beziehungsweise des Filterelements mit dem Boden 40 beziehungsweise Gehäuseboden ist in Fig. 9 veranschaulicht. So hintergreift gemäß der in Fig. 9 oberen Darstellung der Steg 34 bereits ein Stück weit den Haltesteg 36. Nun wird die Filterkartusche 12 weiter um die Längsachse 26 gedreht, wie dies in der in Fig. 9 oberen Darstellung durch einen weiteren Pfeil 52 veranschaulicht ist. Auch aus der in Fig. 9 unteren Darstellung ist ersichtlich, dass der Steg 34 aufgrund des weiteren Verdrehens der Filterkartusche 12 den Haltesteg 36 des Widerlagers 42 bereits ein Stück weit hintergreift.

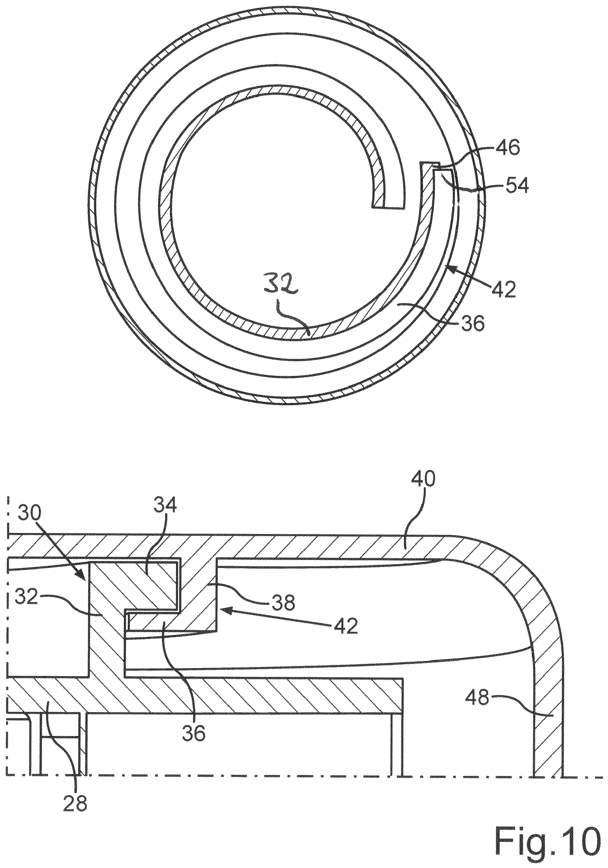

In Fig. 10 ist nun die Situation gezeigt, in welcher die Filterkartusche 12 in ihre Montagestellung verbracht ist und mit dem Boden 40 verhakt ist. In dieser Montagestellung liegt der Anschlag 46 des Halteelements 30 an einem außenliegenden Ende 54 des Widerlagers 42 an. Wenn also das spiralförmige Halteelement 30 durch Drehen um die Längsachse 26 in die Montagestellung verbracht ist, so ist auch die Filterkartusche 12 in einer gewünschten Orientierung zu dem Deckel 18 des Filtergehäuses 14 ausgerichtet. Anschließend kann der Deckel 18 mit der Filterkartusche 12 verschraubt werden. Des Weiteren ist aus der in Fig. 10 oberen Darstellung ersichtlich, dass in der Montagestellung der Filterkartusche 12 der Steg 34 des Halteelements 30 vorzugsweise vollständig von dem Haltesteg 36 des Widerlagers 42 überdeckt ist.

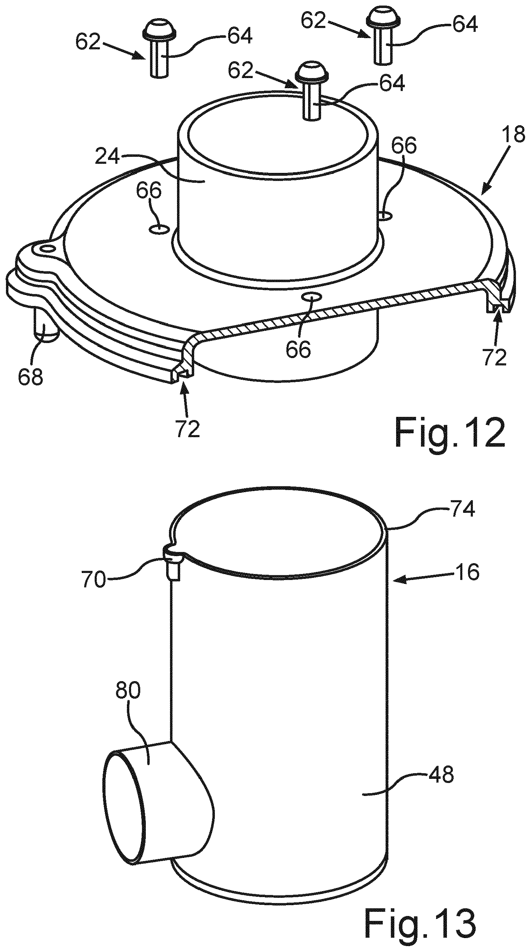

Für die Montage des Deckels 18 weist die Filterkartusche 12, wie insbesondere aus Fig. 11 gut ersichtlich ist, in einem dem Halteelement 30 gegenüberliegenden Endbereich eine weitere oder zweite, vorliegend obere Endplatte 56 auf. Einstückig mit dieser Endplatte 56 sind (vorliegend drei) Schraubsockel 58 ausgebildet, welche Befestigungsaugen in Form von Löchern 60 aufweisen. Die Löcher 60, welche vorzugsweise als Sacklöcher ausgebildet sind, können ein Gewinde aufweisen. Es kann jedoch auch vorgesehen sein, dass beim Einschrauben von Befestigungselementen in Form von Befestigungsschrauben 62, welche etwa in Fig. 12 gezeigt sind, in dem jeweiligen Schraubsockel 58 im Bereich des Lochs 60 ein Gewinde ausgebildet wird.

Aus Fig. 12 ist des Weiteren ersichtlich, dass zum Festlegen des Deckels 18 an der Filterkartusche 12 ein jeweiliger Schaft 64 der Befestigungsschrauben 62 durch Durchtrittsöffnungen 66 hindurchgeführt wird, welche in dem Deckel 18 ausgebildet sind.

Es wird also durch das Verschrauben des Deckels 18 mit der Filterkartusche 12 dafür gesorgt, dass der Deckel 18 an dem Gehäusetopf 16 festgelegt wird. Um den Deckel 18 relativ zu der Filterkartusche 12 so auszurichten, dass die Schäfte 64 der Befestigungsschrauben 62 durch die Durchtrittsöffnungen 66 hindurchgeführt und in die Löcher 60 eingebracht werden können, ist an dem Deckel 18 vorliegend ein zapfenförmiger Vorsprung 68 ausgebildet. Dieser zapfenförmige Vorsprung 68 wird in eine nach Art einer Ausbuchtung ausgestaltete Aufnahme 70 eingeführt, welche in der Mantelwand 48 des Gehäusetopfs 16 ausgebildet ist (vergleiche Fig. 13). Durch den zapfenförmigen Vorsprung 68 ist im Zusammenwirken mit der Aufnahme 70 ein Verdrehschutz für den Deckel 18 bereitgestellt.

Aus einer Zusammenschau von Fig. 12 und Fig. 13 ist des Weiteren gut ersichtlich, dass an einem Rand des Deckels 18 eine Nut 72 ausgebildet ist. Wenn der Deckel 18 an den Gehäusetopf 16 montiert ist, so ist ein stirnseitiger Rand 74 der Mantelwand 48 in dieser Nut 72 aufgenommen.

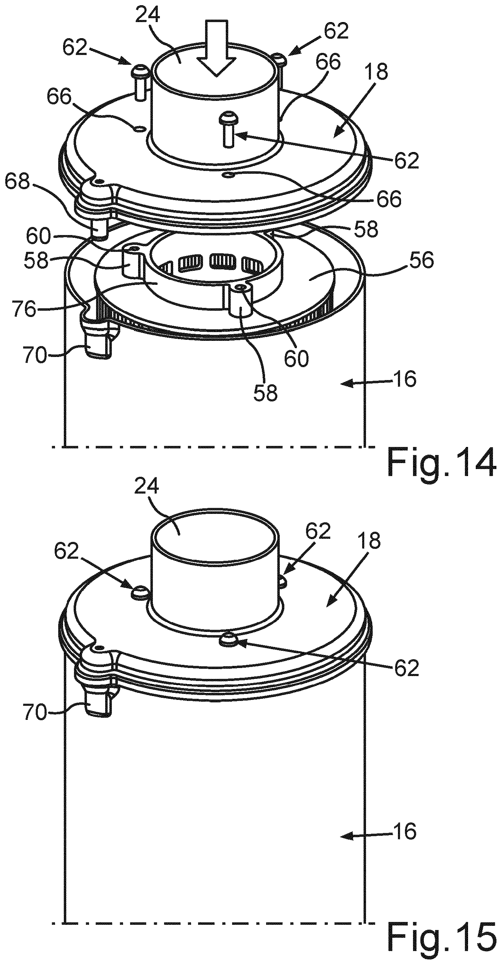

In Fig. 14 ist veranschaulicht, wie der Deckel 18 von oben auf den Gehäusetopf 16 aufgesetzt wird. Hierbei wird der Deckel 18 durch Einführen des Vorsprungs 68 in die Aufnahme 70 so ausgerichtet, dass die in dem Deckel 18 ausgebildeten Durchtrittsöffnungen 66 mit den Löchern 60 der Schraubsockel 58 fluchten. Außerdem ist aus Fig. 14 ersichtlich, dass ein Endbereich 76 des Kanals 20 in Richtung der Längsachse 26 über die zweite Endplatte 56 übersteht. In diesen Endbereich 76 kann ein Ende des rohrförmigen Stutzens 24 eingeführt werden.

In Fig. 15 ist gezeigt, wie der Deckel 18 dicht sitzend mit dem Gehäusetopf 16 verbunden ist, indem die Befestigungsschrauben 62 angezogen wurden.

Aus der Schnittdarstellung des Fluidfilters 10 in Fig. 16 ist besonders gut ersichtlich, dass der Kanal 20 vorliegend als Stützrohr ausgebildet ist, welches von dem Filtermaterial 22 umgeben ist. Dieses Stützrohr beziehungsweise dieser Stützkäfig weist eine Mehrzahl von Durchtrittsöffnungen 78 auf, über welche das zu filternde Fluid beziehungsweise Medium in das Innere des Kanals 20 gelangen kann. Des Weiteren ist aus Fig. 16 ersichtlich, wie bei an die Filterkartusche 12 montiertem Deckel 18 das Filterelement beziehungsweise die Filterkartusche 12 mit dem Boden 40 beziehungsweise dem Widerlager 42 verhakt ist.

Außerdem lässt sich anhand von Fig. 16 erläutern, dass der Kanal 20 auf Zug belastet wird. Denn die Befestigungsschrauben 62, welche in die in den Schraubsockeln 58 ausgebildeten Löcher 60 hineingeschraubt sind, drücken einerseits den Deckel 18 gegen den Gehäusetopf 16. Andererseits wird durch das Anziehen der Befestigungsschrauben 62 der Steg 34 des Halteelements 30 in Richtung der Längsachse 26 gegen den Haltesteg 36 des Widerlagers 42 gezogen. Des Weiteren wird der stirnseitige Rand 74 der Mantelwand 48 des Gehäusetopfs 16 in die Nut 72 hineingezogen, welche an dem Rand des Deckels 18 ausgebildet ist. Der Deckel 18 und der Gehäusetopf 16 werden also im Bereich einer in der Nut 72 ausgebildeten Dichtfläche zusammengedrückt.

Aus Fig. 16 ist des Weiteren ersichtlich, dass der Gehäusetopf 16 einen Stutzen 80 aufweisen kann, welcher vorliegend in der Mantelwand 48 ausgebildet ist. Über diesen Stutzen 80 kann das zu filternde Fluid oder Medium dem Ringraum 82 zugeführt werden, welcher in dem Filtergehäuse 14 des Fluidfilters 10 das Filtermaterial 22 der Filterkartusche 12 umgibt.

## Patentansprüche

1. Fluidfilter für einen Kraftwagen, mit einer Filterkartusche (12), welche in einem Filtergehäuse (14) des Fluidfilters (10) angeordnet ist, wobei das Filtergehäuse (14) einen Gehäusetopf (16) und ein Deckelelement (18) umfasst, wobei die Filterkartusche (12) ein Filtermaterial (22) aufweist, und wobei die Filterkartusche (12) durch Drehen um eine Längsachse (26) der Filterkartusche (12) mit dem Gehäusetopf (16) des Filtergehäuses (14) verbindbar ist, an einer Endplatte (28) der Filterkartusche (12) ein Halteelement (30) mit einem Steg (34) angeordnet ist, welcher von einer Wand (32) des Halteelements (30) absteht,
**dadurch gekennzeichnet, dass**
die Wand (32) des Halteelements (30) radial zur Längsachse (26) spiralförmig ausgebildet ist, und wobei in einer Montagestellung der Filterkartusche (12) der Steg (34) des Halteelements (30) einen Haltesteg (36) hintergreift, welcher von einer radial zur Längsachse (26) spiralförmigen Wand (38) eines an dem Gehäusetopf (16) angeordneten Widerlagers (42) in konstantem Abstand absteht.

2. Fluidfilter nach Anspruch 1,
**dadurch gekennzeichnet, dass**
das Widerlager (42) einstückig mit dem Gehäusetopf (16), insbesondere einstückig mit einem Boden (40) des Gehäusetopfs (16), ausgebildet ist.

3. Fluidfilter nach Anspruch 1 oder 2,
**dadurch gekennzeichnet, dass**
der Gehäusetopf (16) eine Aufnahme (70) für wenigstens einen an dem Deckelelement (18) angeordneten Vorsprung (68) aufweist, wobei durch ein Eingreifen des wenigstens einen Vorsprungs (68) in die Aufnahme (70) eine Montageorientierung des Deckelelements (18) relativ zu dem Gehäusetopf (16) vorgegeben ist, und/oder an dem Deckelelement (18) eine Nut (72) ausgebildet ist, in welcher bei an den Gehäusetopf (16) montiertem Deckelelement (18) ein stirnseitiger Rand (74) einer Wand (48) des Gehäusetopfs (16) aufgenommen ist.

4. Filterkartusche für einen Fluidfilter (10) eines Kraftwagens, welche in einem einen Gehäusetopf (16) und ein Deckelelement (18) umfassenden Filtergehäuse (14) des Fluidfilters (10) anordenbar ist, wobei die Filterkartusche (12) ein Filtermaterial (22) aufweist, und wobei die Filterkartusche (12) durch Drehen um eine Längsachse (26) der Filterkartusche (12) mit dem Gehäusetopf (16) des Filtergehäuses (14) verbindbar ist, an einer Endplatte (28) der Filterkartusche (12) ein Halteelement (30) mit einem Steg (34) angeordnet ist, welcher von einer Wand (32) des Halteelements (30) absteht,
**dadurch gekennzeichnet, dass**
die Wand (32) des Halteelements (30) radial zur Längsachse (26) spiralförmig ausgebildet ist, und wobei der Steg (34) des Halteelements (30) dazu ausgebildet ist, in einer Montagestellung der Filterkartusche (12) einen Haltesteg (36) zu hintergreifen, welcher von einer radial zur Längsachse (26) spiralförmigen Wand (38) eines an dem Gehäusetopf (16) angeordneten Widerlagers (42) absteht, wobei ein Abstand des Stegs (34) des Halteelements (30) von einer dem Filtermaterial (22) abgewandten Oberfläche der Endplatte (28) in Umfangsrichtung der Filterkartusche (12) konstant ist.

5. Filterkartusche nach Anspruch 4,
**dadurch gekennzeichnet, dass**
die Filterkartusche (12) in einem dem Halteelement (30) gegenüberliegenden Endbereich wenigstens ein Befestigungsauge (60) aufweist, in welches zum Befestigen des Deckelelements (18) an der Filterkartusche (12) ein Befestigungselement (62) einbringbar ist, welches durch eine in dem Deckelelement (18) ausgebildete Durchtrittsöffnung (66) hindurchführbar ist.

6. Filterkartusche nach Anspruch 5,
**dadurch gekennzeichnet, dass**
das wenigstens eine, insbesondere ein Gewinde aufweisende, Befestigungsauge durch ein in einem Sockel (58) ausgebildetes Loch (60), insbesondere Sackloch, bereitgestellt ist.

7. Filterkartusche nach Anspruch 6,
**dadurch gekennzeichnet, dass**
der wenigstens eine Sockel (58) einstückig mit einer weiteren, insbesondere einen mit einem Kanal (20) der Filterkartusche (12) korrespondierenden Durchlass aufweisenden, Endplatte (56) der Filterkartusche (12) ausgebildet ist.

8. Filterkartusche nach einem der Ansprüche 5 bis 7,
**dadurch gekennzeichnet, dass**
die Filterkartusche (12) eine Mehrzahl der, insbesondere in Umfangsrichtung der Filterkartusche (12) gleichmäßig voneinander beabstandeten, Befestigungsaugen (60) aufweist.

9. Filterkartusche nach einem der Ansprüche 4 bis 8,
**dadurch gekennzeichnet, dass**
ein Krümmungsradius des Halteelements (30) von einem Zentrum einer Spiralform der Wand (32) des Halteelements (30) hin zu einem Rand der Spiralform zunimmt.

10. Filterkartusche nach einem der Ansprüche 4 bis 9,
**dadurch gekennzeichnet, dass**
das Halteelement (30) einstückig mit der, insbesondere geschlossen ausgebildeten, Endplatte (28) der Filterkartusche (12) ausgebildet ist.

11. Filterkartusche nach einem der Ansprüche 4 bis 10,
**dadurch gekennzeichnet, dass**
an einem äußeren Ende des Halteelements (30) ein Anschlag (46) ausgebildet ist, welcher durch das Drehen der Filterkartusche (12) um die Längsachse (26) mit einem äußeren Ende (54) des Widerlagers (42) in Anlage bringbar ist.

12. Filterkartusche nach einem der Ansprüche 4 bis 11,
**dadurch gekennzeichnet, dass**
ein Kanal (20) der Filterkartusche (12) als eine Mehrzahl von Durchtrittsöffnungen (78) aufweisendes Stützrohr ausgebildet ist und/oder ein Endbereich (76) eines Kanals (20) der Filterkartusche (12) in Richtung der Längsachse (26) über eine weitere Endplatte (56) der Filterkartusche (12) übersteht, wobei in den Endbereich (76) des Kanals (20) ein rohrförmiger Stutzen (24) des Deckelelements (18) einführbar ist.

13. Filterkartusche nach einem der Ansprüche 4 bis 12,
**dadurch gekennzeichnet, dass**
das Halteelement (30) in Umfangsrichtung der Filterkartusche (12) eine Mehrzahl von Durchbrüchen (44) aufweist.

## Claims

1. Fluid filter for a motor car, having a filter cartridge (12), which is arranged in a filter housing (14) of the fluid filter (10), wherein the filter housing (14) comprises a housing pot (16) and a cover element (18), wherein the filter cartridge (12) has a filter material (22), and wherein the filter cartridge (12) can be connected to the housing pot (16) of the filter housing (14) by rotation around a longitudinal axis (26) of the filter cartridge (12), and a retaining element (30) is arranged on an end plate (28) of the filter cartridge (12) with a bar (34), which protrudes from a wall (32) of the retaining element (30),
**characterised in that**
the wall (32) of the retaining element (30) is formed radially to the longitudinal axis (26) in a spiral shape, and wherein the bar (34) of the retaining element (30) engages behind a retaining bar (36) in a mounting position of the filter cartridge (12), which retaining bar protrudes at a constant spacing from a spiral-shaped wall (38), radial to the longitudinal axis (36), of a counter bearing (42) arranged on the housing pot (16).

2. Fluid filter according to claim 1,
**characterised in that**
the counter bearing (42) is formed as one part with the housing pot (16), in particular as one part with a base (40) of the housing pot (16).

3. Fluid filter according to claim 1 or 2,
**characterised in that**
the housing pot (16) has a receptacle (70) for at least one protrusion (68) arranged on the cover element (18), wherein a mounting orientation of the cover element (18) relative to the housing pot (16) is pre-determined by an engagement of the at least one protrusion (68) into the receptacle (70), and/or a groove (72) is formed on the cover element (18), in which groove an edge (74) on the end face of a wall (48) of the housing pot (16) is received when the cover element (18) is mounted on the housing pot (16).

4. Filter cartridge for a fluid filter (10) of a motor car, which can be arranged in a filter housing (14) of the fluid filter (10) comprising a housing pot (16) and a cover element (18), wherein the filter cartridge (12) has a filter material (22), and wherein the filter cartridge (12) can be connected to the housing pot (16) of the filter housing (14) by rotation around a longitudinal axis (26) of the filter cartridge (12), and a retaining element (30) is arranged on an end plate (28) of the filter cartridge (12) with a bar (34), which protrudes from a wall (32) of the retaining element (30),
**characterised in that**
the wall (32) of the retaining element (30) is formed radially to the longitudinal axis (26) in a spiral shape, and wherein the bar (34) of the retaining element (30) is designed to engage behind a retaining bar (36) in a mounting position of the filter cartridge (12), which retaining bar protrudes from a spiral-shaped wall (38), radial to the longitudinal axis (26), of a counter bearing (42) arranged on the housing pot (16), wherein a spacing of the bar (34) of the retaining element (30) from a surface of the end plate (28) facing away from the filter material (22) is constant in the peripheral direction of the filter cartridge (12).

5. Filter cartridge according to claim 4,
**characterised in that**
the filter cartridge (12) has at least one fixing eye (60) in an end region opposite the fixing element (30), into which fixing eye a fixing element (62) can be introduced to fix the cover element (18) to the filter cartridge (12), which fixing element can be fed through a through opening (66) formed in the cover element (18).

6. Filter cartridge according to claim 5,
**characterised in that**
the at least one fixing eye, in particular having a thread, is provided by a hole (60), in particular a blind hole, formed in a socket (58).

7. Filter cartridge according to claim 6,
**characterised in that**
the at least one socket (58) is formed as one part with a further end plate (56) of the filter cartridge (12), in particular an end plate having a passage corresponding to a conduit (20) of the filter cartridge (12).

8. Filter cartridge according to one of claims 5 to 7,
**characterised in that**
the filter cartridge (12) has a plurality of fixing eyes (60), which are in particular equally spaced apart from one another in the peripheral direction of the filter cartridge (12).

9. Filter cartridge according to one of claims 4 to 8,
**characterised in that**
a radius of curvature of the fixing element (30) increases from a centre of a spiral shape of the wall (32) of the fixing element (30) to an edge of the spiral shape.

10. Filter cartridge according to one of claims 4 to 9,
**characterised in that**
the fixing element (30) is formed as one part with the end plate (28) of the filter cartridge (12), said end plate in particular being formed closed.

11. Filter cartridge according to one of claims 4 to 10,
**characterised in that**
a stop (46) is formed on an outer end of the fixing element (30), which stop can be brought to rest on an outer end (54) of the counter bearing (42) by rotating the filter cartridge (12) around the longitudinal axis (26).

12. Filter cartridge according to one of claims 4 to 11,
**characterised in that**
a conduit (20) of the filter cartridge (12) is formed as a supporting tube having a plurality of through openings (78) and/or an end region (76) of a conduit (20) of the filter cartridge (12) protrudes in the direction of the longitudinal axis (26) over a further end plate (56) of the filter cartridge (12), wherein a tubular connecting piece (24) of the cover element (18) can be introduced into the end region (76) of the conduit (20).

13. Filter cartridge according to one of claims 4 to 12,
**characterised in that**
the fixing element (30) has a plurality of apertures (44) in the peripheral direction of the filter cartridge (12).

## Revendications

1. Filtre à fluide pour véhicule automobile, comportant une cartouche filtrante (12) disposée dans un carter (14) du filtre à fluide (10), ledit carter de filtre (14) comprenant un corps de carter (16) et un élément formant couvercle (18), ladite cartouche filtrante (12) présentant un matériau filtrant (22) et ladite cartouche filtrante (12) pouvant être reliée au corps (16) du carter de filtre (14) par rotation sur l'axe longitudinal (26) de la cartouche filtrante (12) et un élément de retenue (30) doté d'une nervure (34) faisant saillie d'une paroi (32) dudit élément de retenue (30) étant agencé sur une plaque terminale (28) de la cartouche filtrante (12),
**caractérisé en ce que**
la paroi (32) de l'élément de retenue (30) est en en forme de spirale, vue radialement par rapport à l'axe longitudinal (26), ladite nervure (34) de l'élément de retenue (30) étant conçue pour s'enclencher, en position de montage de la cartouche filtrante (12), derrière une nervure de retenue (36) faisant saillie, sur une distance constante, d'une paroi (38), en forme de spirale vue radialement par rapport à l'axe longitudinal (26), d'une butée (42) agencée contre le corps de carter (16).

2. Filtre à fluide selon la revendication 1,
**caractérisé en ce que**
la butée (42) est formée d'un seul tenant avec le corps de carter (16), notamment d'un seul tenant avec un fond (40) du corps de carter (16).

3. Filtre à fluide selon la revendication 1 ou 2,
**caractérisé en ce que**
le corps de carter (16) présente un logement (70) destiné à au moins une saillie (68) agencée sur l'élément formant couvercle (18), une orientation de montage de l'élément formant couvercle (18) par rapport au corps de carter (16) étant prédéterminée par l'enclenchement de ladite au moins une saillie (68) dans le logement (70), et/ou une rainure (72) étant formée sur l'élément formant couvercle (18), dans laquelle rainure un bord avant (74) d'une paroi (48) du corps de carter (16) vient se loger lorsque l'élément formant couvercle (18) est monté sur le corps de carter (16).

4. Cartouche filtrante pour un filtre à fluide (10) d'un véhicule automobile, laquelle peut être agencée dans un carter de filtre (14) du filtre à fluide (10) comprenant un corps de carter (16) et un élément formant couvercle (18), la cartouche filtrante (12) présentant un matériau filtrant (22), et ladite cartouche filtrante (12) pouvant être reliée au corps (16) du carter de filtre (14) par rotation sur l'axe longitudinal (26) de la cartouche filtrante (12) et un élément de retenue (30) doté d'une nervure (34) faisant saillie d'une paroi (32) dudit élément de retenue (30) étant agencé sur une plaque terminale (28) de la cartouche filtrante (12),
**caractérisée en ce que**
la paroi (32) de l'élément de retenue (30) est en en forme de spirale, vue radialement par rapport à l'axe longitudinal (26), ladite nervure (34) de l'élément de retenue (30) étant conçue pour s'enclencher, en position de montage de la cartouche filtrante (12), derrière une nervure de retenue (36) faisant saillie d'une paroi (38), en forme de spirale vue radialement par rapport à l'axe longitudinal (26), d'une butée (42) agencée contre le corps de carter (16), ladite saillie de la nervure (34) de l'élément de retenue par rapport à une surface de la plaque terminale (28) détournée du matériau filtrant (22) étant constante dans le sens circonférentiel de la cartouche filtrante (12).

5. Cartouche filtrante selon la revendication 4,
**caractérisée en ce que**
dans une zone terminale opposée à l'élément de retenue (30), la cartouche filtrante (12) présente au moins un oeillet de fixation (60) dans lequel peut être inséré un élément de fixation (62) permettant de fixer l'élément formant couvercle (18) à la cartouche filtrante (12) et pouvant être introduit dans une ouverture de passage (66) formée dans l'élément formant couvercle (18).

6. Cartouche filtrante selon la revendication 5,
**caractérisée en ce que**
l'au moins un oeillet de fixation, qui est notamment fileté, est assuré par un alésage (60), notamment borgne, formé dans un socle (58).

7. Cartouche filtrante selon la revendication 6,
**caractérisée en ce que**
l'au moins un socle (58) est formé d'un seul tenant avec une autre plaque terminale (56) de la cartouche filtrante (12), laquelle présente notamment un passage en correspondance avec un canal (20) de la cartouche filtrante (12).

8. Cartouche filtrante selon l'une des revendications 5 à 7,
**caractérisée en ce que**
la cartouche filtrante (12) présente une pluralité d'oeillets de fixation (60) qui sont notamment équidistants les uns des autres dans le sens circonférentiel de la cartouche filtrante (12).

9. Cartouche filtrante selon l'une des revendications 4 à 8,
**caractérisée en ce que**
le rayon de courbure de l'élément de retenue (30) augmente depuis le centre d'une forme en spirale de la paroi (32) de l'élément de retenue (30) vers un bord de la forme en spirale.

10. Cartouche filtrante selon l'une des revendications 4 à 9,
**caractérisée en ce que**
l'élément de retenue (30) est formé d'un seul tenant avec la plaque terminale (28), notamment de configuration fermée, de la cartouche filtrante (12).

11. Cartouche filtrante selon l'une des revendications 4 à 10,
**caractérisée en ce que**
sur une extrémité extérieure de l'élément de retenue (30), il est formé un arrêt (46) susceptible de venir en appui contre une extrémité extérieure (54) de la butée (42) sous l'effet de la rotation de la cartouche filtrante (12) sur son axe longitudinal (26).

12. Cartouche filtrante selon l'une des revendications 4 à 11,
**caractérisée en ce que**
un canal (20) de la cartouche filtrante (12) est réalisé sous la forme d'un tube de support présentant une pluralité d'ouvertures de passage (78) et/ou une zone terminale (76) d'un canal (20) de la cartouche filtrante (12) dépasse d'une autre plaque terminale (56) de la cartouche filtrante (12), dans le sens de l'axe longitudinal (26), un raccord tubulaire (24) de l'élément de recouvrement (18) pouvant être inséré dans ladite zone terminale (76) du canal (20).

13. Cartouche filtrante selon l'une des revendications 4 à 12,
**caractérisée en ce que**
l'élément de retenue (30) présente une pluralité d'ouvertures (44) dans le sens circonférentiel de la cartouche filtrante (12).
